(19) Europäisches Patentamt
European Patent Office
Office européen des brevets

(11) **EP 3 208 470 B1**

(12) **FASCICULE DE BREVET EUROPEEN**

(45) Date de publication et mention de la délivrance du brevet:
**11.03.2020 Bulletin 2020/11**

(51) Int Cl.:
***F04D 29/32*** *(2006.01)*      ***F04D 29/66*** *(2006.01)*
***G01H 1/00*** *(2006.01)*      ***G10K 15/00*** *(2006.01)*

(21) Numéro de dépôt: **17150815.3**

(22) Date de dépôt: **10.01.2017**

(54) **PROCÉDÉ POUR AMÉLIORER LA QUALITÉ SONORE D'UNE MACHINE TOURNANTE DÉPLAÇANT UN FLUIDE**

VERFAHREN ZUR VERBESSERUNG DER LÄRMQUALITÄT EINER UMLAUFENDEN MASCHINE, DIE EIN FLUID BEWEGT

METHOD FOR IMPROVING THE SOUND QUALITY OF A ROTARY MACHINE MOVING A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2016 FR 1651152**

(43) Date de publication de la demande:
**23.08.2017 Bulletin 2017/34**

(73) Titulaire: **Robert Bosch GmbH**
**70469 Stuttgart (DE)**

(72) Inventeurs:
• **TRELA, Marc**
**94410 Saint-Maurice (FR)**
• **AU, Carine**
**77000 Vaux-Le-Penil (FR)**
• **TEBEC, Jean-Louis**
**91190 Gif-sur-Yvette (FR)**
• **HAYNE, Bénédicte**
**75014 Paris (FR)**

(74) Mandataire: **Cabinet HERRBURGER**
**115, Boulevard Haussmann**
**75008 Paris (FR)**

(56) Documents cités:
**FR-A1- 2 617 914**     **US-A- 4 732 532**

• **CATTANEI ET AL: "Reduction of the tonal noise annoyance of axial flow fans by means of optimal blade spacing", APPLIED ACOUSTICS, ELSEVIER PUBLISHING, GB, vol. 68, no. 11-12, 26 septembre 2007 (2007-09-26), pages 1323-1345, XP022274092, ISSN: 0003-682X, DOI: 10.1016/J.APACOUST.2006.07.012**
• **W DOBRZYNSKI: "Propeller noise reduction by means of unsymmetrical blade-spacing", JOURNAL OF SOUND AND VIBRATION, vol. 163, no. 1, 1 janvier 1993 (1993-01-01), pages 123-136, XP055391337,**

## Description

### Domaine de l'invention

L'invention se rapporte à un procédé pour améliorer la qualité sonore du fonctionnement d'une machine tournante par une répartition irrégulière des parties tournantes du rotor (pales, aubes, ...).

L'invention se rapporte également à une machine tournante ainsi obtenue.

### Etat de la technique

Le bruit et les vibrations générés par les machines tournantes peuvent se décomposer en deux parties : d'une part, une large bande large de bruit générée par des fluctuations aléatoires de l'écoulement et les turbulences et d'autre part, le son généré par les fréquences liées à la vitesse de rotation, au nombre d'aubes et aux obstacles fixes à proximité des aubes.

Cela se traduit par un spectre de fréquence de bruit composé d'un fond continu d'où émergent de fortes lignes sonores (raies spectrales) qui marquent le son (sifflement, son pur...). Or, de tels sons ou bruits sont particulièrement gênants.

De nombreuses tentatives ont été faites pour réduire l'amplitude de tels sons. Une solution bien connue consiste à réorganiser la répartition angulaire des aubes. En conséquence, on réduit le son généré à la fréquence de passage de la paie et l'énergie est redistribuée sur les autres sons plus réduits à des multiples de la fréquence de la vitesse de rotation. Le bruit qui en résulte est en général mieux perçu mais le son peut rester dur (tonal).

Ainsi, les nombreuses études concernant la réduction limitée du niveau de bruit et la gêne occasionnée par les dites machines proposent toutes de modifier l'écartement angulaire entre les pales pour réduire au maximum l'amplitude des sons à la fréquence de passage des pales, quelle que soit la fréquence de rotation.

Un document de l'art antérieur est CATTANEI ET AL : « Réduction of the tonal noise annoyance of axial flow fans by means of optimal blade spacing », APPLIED ACOUSTICS, ELSEVIER PUBLISHING, GB, vol. 68, no. 11-12, 26 septembre 2007, pages 1323-1345, XP022274092

Après avoir présenté un certain nombre d'autres procédés connus et analysés, ce document décrit un procédé de réduction de la gêne sonore produite par un ventilateur axial en optimisant l'espacement des pales.

Le procédé utilise les interférences entre les émissions sonores associées à chaque pale pour les atténuer par neutralisation partielle par la combinaison des harmoniques. Il ne s'agit que d'une réduction de l'intensité sonore et non pas d'une transformation sonore.

Le procédé ne concerne que les fondamentales et les harmoniques et leur combinaison en modifiant l'intervalle entre les pales. Il ne s'agit pas de modifier la qualité sonore. La gêne créée par l'émission de bruit subsiste même si cette gêne est atténuée.

### But de l'invention

La présente invention a pour but de réduire la gêne que constitue le bruit généré par une machine tournante (notamment un ventilateur, une turbine) équipée d'un rotor à aubes.

De manière plus précise, l'invention a pour but de remplacer les sons gênants par un groupe plus réduit de sons plus réduit et dont les fréquences correspondent à un accord musical sonore.

### Exposé et avantages de l'invention

A cet effet, la présente invention a pour objet un procédé pour améliorer la qualité sonore du fonctionnement d'une machine tournante par une répartition irrégulière des pales, selon la revendication 1. Ce procédé est caractérisé en ce qu'on détermine la répartition des pales pour accentuer les sons formant un accord et atténuer réciproquement les autres sons émis :

- ledit procédé selon lequel, ayant, à partir des données physiques de la machine à réaliser, déterminé le nombre de pales et la vitesse de fonctionnement de la machine *utilisés pour le calcul du spectre de fréquences,* et
- ayant établi des fonctions ($\alpha$i) obtenues par interpolation des amplitudes de raies relevées expérimentalement sur des rotors présentant différents nombres de pales régulièrement espacées,
- on procède par itérations successives ;

    - dans une première étape :

- on génère aléatoirement un nombre X de configurations physiquement réalisables dont la somme des espacements angulaires des pales est égale à 360° à partir des données physiques et des limites imposées pour les espacements minimums entre les pales,
- on calcule le spectre **de fréquence** pour chacune des configurations avec un nombre de raies, fixé,
- on détermine les raies formant l'accord musical du spectre,
- on compare ces raies **à un** critère d'émergence par rapport aux autres raies et de différence maximale d'amplitude entre ces raies retenues,
- on retient une proportion donnée de configurations répondant à ces critères et une proportion donnée de configurations proches de celles-ci pour former les parents, les autres configurations étant rejetées,

- dans l'étape suivante :

  - on forme une nouvelle population avec les configurations parents de l'étape précédente à laquelle on ajoute :

    - une proportion de configurations mutées générées aléatoirement autour des parents, et
    - le complément formé par de nouvelles configurations purement aléatoires pour enrichir la population et obtenir ainsi une nouvelle population ayant le même nombre X de configurations,

  - on calcule à nouveau les spectres **de fréquence** de ces configurations et on le compare aux critères comme dans l'étape précédente, cette nouvelle comparaison retenant les configurations répondant aux critères selon la proportion et des configurations proches des critères qui sont également retenus dans la proportion pour constituer ainsi les nouveaux parents pour l'étape suivante,
  - on poursuit les itérations un nombre de fois pour faire converger les configurations vers des configurations optimales parmi lesquelles on retient la solution qui est physiquement la plus compatible c'est-à-dire dont l'écart angulaire entre les pales correspond à la meilleure disposition physique efficace (balourd, performance aéraulique...).

En d'autres termes, selon l'invention, quelle que soit la vitesse de rotation, on obtient de tels sons en répartissant les pales du rotor ou les obstacles fixes du stator selon un espacement angulaire déterminé.

Contrairement à l'état de la technique, selon l'invention, on transforme différentes fréquences en un accord musical (exemple : notes consonantes) pour que le son émis soit plus agréable.

Contrairement à l'état de la technique, la présente invention conserve la ligne sonore pour certaines fréquences en créant un son musical se dégageant du fond sonore pour avoir l'amplitude la plus faible du son par rapport à toutes les autres fréquences. Le niveau de bruit perçu, généré par des aubes espacées irrégulièrement, est en général inférieur à celui d'un ventilateur dont les aubes sont réparties régulièrement. L'invention modifie le spectre de fréquence en améliorant le côté agréable du bruit du ventilateur. De plus, ce bruit peut être synonyme de sentiment de meilleure qualité pour le produit ou encore le son peut identifier un produit (identité sonore).

Selon une autre caractéristique avantageuse, on définit comme critère d'émergence pour les raies choisies un minimum de 5 dB et une différence entre les raies, inférieure à 3 dB.

Cela permet de définir clairement la sonorité de la machine tournante.

Suivant une autre caractéristique du procédé, on calcule le spectre de chaque configuration en appliquant la formule suivante :

$$A_n = \sqrt{B_n{}^2 + C_n{}^2}$$

$$B_n = \sum_{k=1}^{Z-1} \sum_{i=0}^{N} \frac{\alpha_i(\theta_{k+1} - \theta_k)}{2\pi} \left[ \frac{1}{n + i\dfrac{2\pi}{\theta_{k+1} - \theta_k}} (-\cos(n\theta_{k+1}) + \cos(n\theta_k)) \right. \\ \left. + \frac{1}{n - i\dfrac{2\pi}{\theta_{k+1} - \theta_k}} (-\cos(n\theta_{k+1}) + \cos(n\theta_k)) \right]$$

$$C_n = \sum_{k=1}^{Z-1} \sum_{l=0}^{N} \frac{\alpha_i(\theta_{k+1} - \theta_k)}{2\pi} \left[ \frac{1}{n + i\frac{2\pi}{\theta_{k+1} - \theta_k}} (\sin(n\theta_{k+1}) - \sin(n\theta_k)) \right.$$
$$\left. + \frac{1}{n - i\frac{2\pi}{\theta_{k+1} - \theta_k}} (\sin(n\theta_{k+1}) - \sin(n\theta_k)) \right]$$

$$n \in [1; N]$$

$A_n$ :    amplitude en pression acoustique à la fréquence $n * f_r$

$\theta_k$ :    angle de la k-ième pale par rapport à l'origine du référentiel

$N$ :    nombre de termes dans la décomposition en série de Fourier du signal temporel de la pression acoustique entre $\theta_k$ et $\theta_{k+1}$

$Z$ :    nombre de pales

$\alpha_i$ :    fonction obtenue par interpolation des amplitudes de raies relevées expérimentalement sur des roues présentant différents nombres de pales régulièrement espacées

De façon avantageuse, on limite les itérations du procédé et on estime que le procédé converge après un nombre d'itérations, par exemple de 1 000.

Enfin et comme déjà indiqué, l'invention se rapporte non seulement à un procédé pour répartir de manière appropriée les pales du rotor d'une machine tournante ou les obstacles du stator d'une machine tournante ou la combinaison des pales et des obstacles du rotor et du stator pour générer un bruit de fonctionnement assimilable à un accord musical. Une machine tournante dont la répartition des pales est obtenue selon ce procédé est définie dans la revendication 5.

**Dessins**

La présente invention sera décrite ci-après de manière plus détaillée à l'aide de deux exemples de rotor selon l'invention représentés dans les dessins annexés dans lesquels :

- la figure 1 est un schéma d'un premier exemple de rotor,
- la figure 2 est un diagramme puissance/fréquence du spectre de fréquence calculée pour le rotor de la figure 1,
- la figure 3 montre un autre exemple de rotor selon l'invention.

**Description de modes de réalisation de l'invention**

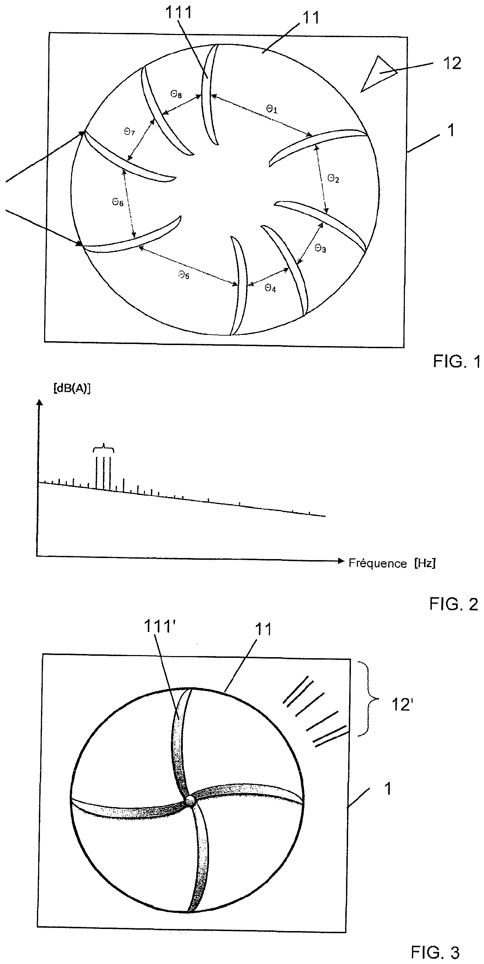

Selon la figure 1, l'invention se rapporte à une machine tournante 1 figurée par un rotor 11 et un stator 12. Le rotor 11 tourne à une fréquence de rotation $f_r$ face à un obstacle 12 appartenant au stator.

La rotation du rotor face à l'obstacle 12 génère un bruit que l'on modifie selon l'invention par la répartition appropriée des pales 111 entre lesquelles on a figuré les écarts angulaires $\theta 1$....

On calcule comme cela sera vu ci-après le spectre des raies de cette machine 1. Ce spectre est représenté par la ligne de fréquence de la figure 2 d'où émergent trois raies qui ont été choisies car formant un accord musical. Ces raies initialement émergentes parmi les autres raies (par exemple 20 raies calculées) pour être accentuées par rapport aux autres raies du spectre par le positionnement angulaire obtenu comme cela sera vu ensuite.

La figure 3 montre le cas d'une autre machine soufflante 1' dont le rotor 11' a des pales 111' réparties régulièrement et qui tournent face à des obstacles 12' du stator, répartis de manière irrégulière, selon le procédé de l'invention,

Partant des données physiques qui définissent le fonctionnement de la machine tournante (ventilateur, turbine), on calcule le nombre de pales Z et la vitesse de rotation fr du rotor. Ces données physiques sont utilisées ensuite par le procédé pour déterminer la répartition des pales sur le rotor ou des aubes fixes du stator.

La suite de la description faite dans le cas de pales de rotor s'applique de façon correspondante aux aubes d'une machine tournante.

A partir de ces données ainsi que données à imposer au procédé pour déterminer la position angulaire des pales, telle que l'espacement minimal entre deux pales (exprimé en degré) et le nombre de configurations à la base de la sélection et de la détermination de la position angulaire, on fixe également le nombre d'itérations NI qu'effectuera le procédé et qui, par expérience, permet de faire converger le procédé vers une ou des solutions optimales.

Pour définir le passage entre les différentes étapes d'itération, on définit pour le procédé,

- la proportion des configurations Pcfc répondant aux critères,

- la proportion des configurations approchées Pcfa,
- la proportion des configurations mutées Pcfm.

La sélection des solutions retenues à la fin d'une étape d'itération pour le passage à l'étape suivante sont des critères concernant l'émergence par rapport aux raies non retenues. Ce seuil est par exemple fixé à 5 dB.

On fixe également la différence maximale d'amplitude entre les raies retenues dans un accord. Cette différence est limitée à 3 dB.

Enfin, ayant calculé le spectre des raies associées à une configuration obtenue, on choisit parmi les raies celles qui constituent un accord ; par exemple sur un nombre de 20 raies, on choisit les raies 8, 10 et 12 qui forment un accord parfait :

$$\left(\frac{10}{8} = \frac{5}{4} \rightarrow tierce; \frac{12}{8} = \frac{3}{2} \rightarrow quinte\right)$$

Partant de ces différentes données d'entrée appliquées à différentes étapes du procédé, on détermine également au préalable une fonction $\alpha_i$ obtenue par interpolation des amplitudes de raies relevées expérimentalement sur des rotors présentant différents nombres de pales régulièrement espacées.

A partir de ces données et critères de base, on applique le procédé qui, à partir d'une étape initiale (première étape) consiste à faire des itérations successives avec des opérations analogues.

Ainsi :

Première étape :

Partant des données physiques, on génère de manière aléatoire, X configurations physiquement réalisables. Il faut en effet que la somme des angles entre les pales du rotor soit égale à 360°.

Pour chaque configuration, on calcule le spectre en application de la formule suivante :

$$A_n = \sqrt{B_n{}^2 + C_n{}^2}.$$

$$B_n = \sum_{k=1}^{Z-1} \sum_{i=0}^{N} \frac{\alpha_i(\theta_{k+1} - \theta_k)}{2\pi} \left[ \frac{1}{n + i\dfrac{2\pi}{\theta_{k+1} - \theta_k}} (-\cos(n\theta_{k+1}) + \cos(n\theta_k)) \right. $$
$$\left. + \frac{1}{n - i\dfrac{2\pi}{\theta_{k+1} - \theta_k}} (-\cos(n\theta_{k+1}) + \cos(n\theta_k)) \right]$$

$$C_n = \sum_{k=1}^{Z-1} \sum_{i=0}^{N} \frac{\alpha_i(\theta_{k+1} - \theta_k)}{2\pi} \left[ \frac{1}{n + i\dfrac{2\pi}{\theta_{k+1} - \theta_k}} (\sin(n\theta_{k+1}) - \sin(n\theta_k)) \right. $$
$$\left. + \frac{1}{n - i\dfrac{2\pi}{\theta_{k+1} - \theta_k}} (\sin(n\theta_{k+1}) - \sin(n\theta_k)) \right]$$

$$n \in [1; N]$$

$A_n$ : amplitude en pression acoustique à la fréquence $n * f_r$

$\theta_k$ : angle de la $k$-ième pale par rapport à l'origine du référentiel

$N$ : nombre de termes dans la décomposition en série de Fourier du signal temporel de la pression acoustique entre $\theta_k$ et $\theta_{k+1}$

$Z$ : nombre de pales

$\alpha_i$ : fonction obtenue par interpolation des amplitudes de raies relevées expérimentalement sur des roues présentant différents nombres de pales régulièrement espacées

On obtient ainsi le spectre de raies de chaque configuration que l'on analyse pour déterminer les raies susceptibles de former un accord.

On compare ces raies en appliquant le critère d'émergence et celui de la différence d'amplitude et on peut obtenir ainsi des raies conformes aux critères dont on retient une proportion Pcfc de telles configurations pour l'étape suivante.

On détermine également des configurations approchées qui ne répondent pas exactement aux critères mais sont voisines de ces critères. Ces configurations sont retenues selon une proportion Pcfa fixée au préalable.

Les autres configurations sont rejetées.

Ces deux groupes de configurations sont soumis à une seconde étape du procédé de l'invention et constituent une partie de la nouvelle population de configurations.

On y ajoute des configurations générées aléatoirement autour des configurations retenues dans la première étape (configurations parents) et on obtient ainsi des mutations retenues selon une proportion Pcfm.

En complément, on forme de nouvelles configurations de manière purement aléatoire à partir des données de base comme cela a été fait initialement dans la première étape pour compléter la population formée des configurations provenant de la première étape et des configurations de mutations qui viennent d'être formées, de manière à obtenir une population composée de X configurations.

On calcule les spectres de cette population et on applique les critères de comparaison comme dans l'étape ci-dessus pour aboutir à des configurations répondant aux critères et à des configurations voisines qui constituent les nouveaux parents, les autres configurations étant rejetées.

Ces nouveaux parents passent à l'étape suivante du procédé par itération.

Les opérations se répètent un nombre défini de fois, par exemple sur 1000 itérations.

Ces itérations font converger les configurations vers une ou quelques configurations optimales. On choisira parmi ces configurations optimales celle qui est physiquement la plus compatible.

Le procédé s'arrête ainsi.

Le procédé décrit ci-dessus pour déterminer la répartition des pales du rotor peut également s'appliquer réciproquement pour déterminer la répartition des aubes du stator et plus généralement pour combiner une répartition de pales de rotor à une répartition d'aubes de stator.

L'invention s'applique également à la fabrication de machines soufflantes telles que des ventilateurs, des turbines ou autres machines de ce type de façon à obtenir des machines ayant un fonctionnement moins dérangeant, acceptable dans l'environnement sonore.

## Revendications

1. Procédé pour améliorer la qualité sonore du fonctionnement d'une machine tournante (1) comprenant un rotor et un stator par une répartition irrégulière de pales (111) du rotor, **caractérisé en ce qu'**on détermine la répartition des pales (111) pour accentuer les sons formant un accord musical et atténuer réciproquement les autres sons émis :

   - ledit procédé selon lequel, ayant, à partir des données physiques de la machine à réaliser, déterminé le nombre (Z) de pales (111) et la vitesse de fonctionnement (fr) de la machine (1) utilisés pour le calcul du spectre de fréquence et
   - ayant établi des fonctions ($\alpha i$) obtenues par interpolation des amplitudes de raies relevées expérimentalement sur des rotors (11') présentant différents nombres de pales (111') régulièrement espacées,
   - on procède par itérations successives :

      - dans une première étape :

         - on génère aléatoirement un nombre X de configurations physiquement réalisables dont la somme des espacements angulaires des pales (111) est égale à 360° à partir des données physiques et des limites imposées pour les espacements minimums entre les pales (111),
         - on calcule le spectre de fréquence pour chacune des configurations avec un nombre de raies, fixé (N),
         - on détermine les raies formant l'accord musical du spectre,
         - on compare ces raies à un critère d'émergence par rapport aux autres raies et de différence maximale d'amplitude entre ces raies retenues,
         - on retient une proportion donnée (Pcfc) de configurations répondant à ces critères et une proportion donnée (Pcfa) de configurations proches de celles-ci pour former les parents, les autres configurations étant rejetées,

      - dans l'étape suivante :

         - on forme une nouvelle population avec les configurations parents de l'étape précédente à laquelle on ajoute :

- une proportion de configurations mutées (Pcfm) générées aléatoirement autour des parents, et
- le complément formé par de nouvelles configurations purement aléatoires pour enrichir la population et obtenir ainsi une nouvelle population ayant le même nombre X de configurations,

- on calcule à nouveau les spectres de fréquence de ces configurations et on le compare aux critères comme dans l'étape précédente, cette nouvelle comparaison retenant les configurations répondant aux critères selon la proportion (Pcfc) et des configurations proches des critères qui sont également retenus dans la proportion (Pcfa) pour constituer ainsi les nouveaux parents pour l'étape suivante,
- on poursuit les itérations un nombre (NI) de fois pour faire converger les configurations vers des configurations optimales parmi lesquelles on retient la solution qui est physiquement la plus compatible c'est-à-dire dont l'écart angulaire entre les pales correspond à la meilleure disposition physique efficace du rotor et du stator.

2. Procédé selon la revendication 1,
   **caractérisé en ce qu'**
   on définit comme critère d'émergence un minimum de 5 dB et une différence entre les raies inférieure à 3 dB.

3. Procédé selon la revendication 1,
   **caractérisé en ce qu'**
   on calcule le spectre de fréquence de chaque configuration en appliquant la formule suivante :

$$A_n = \sqrt{B_n{}^2 + C_n{}^2}$$

$$B_n = \sum_{k=1}^{Z-1} \sum_{i=0}^{N} \frac{\alpha_i(\theta_{k+1} - \theta_k)}{2\pi} \left[ \frac{1}{n + i\frac{2\pi}{\theta_{k+1} - \theta_k}} (-\cos(n\theta_{k+1}) + \cos(n\theta_k)) + \frac{1}{n - i\frac{2\pi}{\theta_{k+1} - \theta_k}} (-\cos(n\theta_{k+1}) + \cos(n\theta_k)) \right]$$

$$C_n = \sum_{k=1}^{Z-1} \sum_{i=0}^{N} \frac{\alpha_i(\theta_{k+1} - \theta_k)}{2\pi} \left[ \frac{1}{n + i\frac{2\pi}{\theta_{k+1} - \theta_k}} (\sin(n\theta_{k+1}) - \sin(n\theta_k)) + \frac{1}{n - i\frac{2\pi}{\theta_{k+1} - \theta_k}} (\sin(n\theta_{k+1}) - \sin(n\theta_k)) \right]$$

$$n \in [1; N]$$

$A_n$ : amplitude en pression acoustique à la fréquence $n * f_r$
$\theta_k$ : angle de la *k*-ième pale par rapport à l'origine du référentiel
$N$ : nombre de termes dans la décomposition en série de Fourier du signal temporel de la pression acoustique entre $\theta_k$ et $\theta_{k+1}$
$Z$ : nombre de pales
$\alpha_i$ : fonction obtenue par interpolation des amplitudes de raies relevées expérimentalement sur des roues présentant différents nombres de pales régulièrement espacées

4. Procédé selon la revendication 1,
   **caractérisé en ce qu'**
   on fixe le nombre d'itérations (NI) à 1 000.

5. Machine tournante **caractérisée en ce qu'**elle comporte des pales dont la répartition irrégulière est obtenue selon le procédé de l'une quelconque des revendications 1 à 4.

**Patentansprüche**

1. Verfahren zur Verbesserung der Lärmqualität des Betriebs einer umlaufenden Maschine (1), welche einen Rotor und einen Stator umfasst, durch eine unregelmäßige Verteilung Blätter (111) des Rotors, **dadurch gekennzeichnet, dass** die Verteilung der Blätter (111) bestimmt wird, um Töne, die einen musikalischen Akkord bilden, zu stärken und umgekehrt die weiteren erzeugten Töne zu dämpfen:

- wobei, nachdem aus den physikalischen Daten der herzustellenden Maschine die Anzahl (Z) der Blätter (111) und die Betriebsgeschwindigkeit (fr) der Maschine (1), die zur Berechnung des Frequenzspektrums verwendet werden, bestimmt wurden, und
- nachdem Funktionen ($\alpha i$) bestimmt wurden, die durch Interpolation der Amplituden von Linien erzielt wurden, welche experimentell auf Rotoren (11'), die verschiedene Anzahlen von regelmäßig verteilten Blättern (111') aufweisen, erfasst wurden,
- sukzessive Iterationen durchgeführt werden:

    - in einem ersten Schritt:

        - eine Anzahl X von physikalisch durchführbaren Konfigurationen wird aus den physikalischen Daten und den den Minimalabständen zwischen den Blättern (111) auferlegten Grenzen nach dem Zufallsprinzip erzeugt, wobei die Summe der Winkelabstände der Blätter (111) der Konfigurationen gleich 360° ist,
        - das Frequenzspektrum wird für jede Konfiguration mit einer festgesetzten Linienanzahl (N) berechnet,
        - die Linien, welche den musikalischen Akkord des Spektrums bilden, werden bestimmt,
        - die Linien werden mit einem Kriterium des Auftretens im Vergleich zu den anderen Linien und des maximalen Amplitudenunterschieds zwischen den ausgewählten Linien verglichen,
        - ein vorgegebener Anteil (Pcfc) Konfigurationen, welche diese Kriterien erfüllen, und ein vorgegebener Anteil (Pcfa) ähnlicher Konfigurationen werden ausgewählt, um die Elternteile zu bilden, wobei die weiteren Konfigurationen abgelehnt werden,

    - im weiteren Schritt:

        - eine neue Population wird aus den Elternkonfigurationen des vorherigen Schrittes gebildet, zu welcher:
        - ein Anteil mutierter Konfigurationen (Pcfm), die um die Elternteile nach dem Zufallsprinzip erzeugt werden, und
        - der Zuschlag, der durch neue, rein zufällige Konfigurationen gebildet wird, um die Population zu bereichern und somit eine neue Population mit der gleichen Anzahl X an Konfigurationen zu erhalten, hinzugefügt werden,

    - die Frequenzspektren dieser Konfigurationen werden erneut berechnet und wie im vorherigen Schritt mit den Kriterien verglichen, wobei dieser neue Vergleich die Konfigurationen, welche die Kriterien erfüllen, gemäß dem Verhältnis (Pcfc) und Konfigurationen, welche nah zu den Kriterien sind und ebenfalls ausgewählt werden, gemäß dem Verhältnis (Pcfa) behält, um somit die neuen Elternteile im nächsten Schritt zu bilden,
    - die Iterationen werden eine Anzahl (NI) von Malen weitergeführt werden, um die Konfigurationen zu optimalen Konfigurationen konvergieren zu lassen, unter denen die physikalisch am kompatibelsten Lösung, d.h. die Lösung, deren Winkelabstand zwischen den Blättern der bestwirksamen physikalischen Anordnung des Rotors und des Stators entspricht, ausgewählt wird.

2. Verfahren gemäß Anspruch 1,
   **dadurch gekennzeichnet, dass** als Auftrittskriterium ein Minimum von 5 dB und ein Linienunterschied kleiner als 3 dB definiert werden.

3. Verfahren gemäß Anspruch 1,
   **dadurch gekennzeichnet, dass** das Frequenzspektrum jeder Konfiguration durch Anwendung der folgenden Formel berechnet wird:

$$A_n = \sqrt{B_n^{\,2} + C_n^{\,2}}$$

$$B_n = \sum_{k=1}^{Z-1} \sum_{i=0}^{N} \frac{\alpha_i(\theta_{k+1} - \theta_k)}{2\pi} \left[ \frac{1}{n + i\frac{2\pi}{\theta_{k+1} - \theta_k}} (-\cos(n\theta_{k+1}) + \cos(n\theta_k)) \right. $$
$$\left. + \frac{1}{n - i\frac{2\pi}{\theta_{k+1} - \theta_k}} (-\cos(n\theta_{k+1}) + \cos(n\theta_k)) \right]$$

$$C_n = \sum_{k=1}^{Z-1} \sum_{i=0}^{N} \frac{\alpha_i(\theta_{k+1} - \theta_k)}{2\pi} \left[ \frac{1}{n + i\frac{2\pi}{\theta_{k+1} - \theta_k}} (\sin(n\theta_{k+1}) - \sin(n\theta_k)) \right. $$
$$\left. + \frac{1}{n - i\frac{2\pi}{\theta_{k+1} - \theta_k}} (\sin(n\theta_{k+1}) - \sin(n\theta_k)) \right]$$

$$n \in [1; N]$$

$A_n$: Amplitude in akustischem Druck bei der Frequenz $n*fr$

$\Theta_k$: Winkel des k-ten Blatts gegenüber dem Ursprung des Koordinatensystems,

N: Anzahl der Glieder in der Zerlegung in Fourier-Reihe des Zeitsignals des akustischen Drucks zwischen $\Theta_k$ und $\Theta_{k+1}$

Z: Anzahl der Blätter

$\alpha_i$: Funktion, die durch Interpolation der Amplituden von Linien erzielt wird, welche experimentell auf Räder, die unterschiedliche Anzahlen von regelmäßig verteilten Blättern aufweisen, erfasst wurden.

4. Verfahren gemäß Anspruch 1,
**dadurch gekennzeichnet, dass** die Anzahl der Iterationen (NI) auf 1.000 festgelegt wird.

5. Umlaufenden Maschine, **dadurch gekennzeichnet, dass** sie Blätter umfasst, wobei die unregelmäßige Verteilung der Blätter durch ein Verfahren gemäß einem der Ansprüche 1 bis 4 bestimmt wird.


**Claims**

1. Method for improving the operational sound quality of a rotary machine (1), comprising a rotor and a stator via an irregular distribution of blades (111) of the rotor, **characterised in that** the distribution of the blades (111) is determined in order to accentuate the sounds forming a musical chord and mutually damping the other sounds emitted:

   - according to which method, starting from the physical data of the machine to be produced, having determined the number (Z) of blades (111) and the operating speed (fr) of the machine (1) used for the calculation of the frequency range, and
   - having established functions ($\alpha$i) obtained by interpolation of the amplitudes of rays detected experimentally on rotors (11') which have different numbers of blades (111') which are regularly spaced apart,
   - successive iterations are carried out:

      - in a first step:

         - there is randomly generated a number X of configurations which can be physically produced and whose sum of the angular spacings of the blades (111) is equal to 360° based on the physical data and limits imposed for the minimum spacings between the blades (111),
         - the frequency range is calculated for each of the configurations with a fixed number (N) of rays,
         - the rays which form the musical chord of the range are determined,
         - these rays are compared with a criterion of emergence relating to the other rays and maximum amplitude difference between these retained rays,
         - a specific proportion (Pcfc) of configurations complying with these criteria and a specific proportion (Pcfa) of configurations close to those are retained in order to form the parents, the other configurations being rejected,

- in the following step:

- a new population is formed with the parent configurations of the preceding step, to which there is added:

- a proportion of muted configurations (Pcfm) which are generated randomly around the parents, and
- the complement formed by new purely random configurations in order to enrich the population and thus to obtain a new population having the same number X of configurations,

- the frequency ranges of these configurations is calculated again, and
it is compared with criteria as in the preceding step, this new comparison retaining the configurations complying with the criteria in accordance with the proportion (Pcfc) and configurations close to the criteria which are also retained in the proportion (Pcfa) in order to thus constitute the new parents for the following step,
- the iterations are continued a number (N) of times in order to converge the configurations towards optimum configurations from which the solution which is physically most compatible is retained, that is to say, whose angular deviation between the blades corresponds to the best effective physical arrangement of the rotor and the stator.

2. Method according to claim 1,
**characterised in that** a minimum of 5 dB and a difference between the rays of less than 3 dB is defined as an emergence criterion.

3. Method according to claim 1,
**characterised in that** the frequency range of each configuration is calculated by applying the following formula:

$$A_n = \sqrt{B_n{}^2 + C_n{}^2}$$

$$B_n = \sum_{k=1}^{Z-1} \sum_{i=0}^{N} \frac{\alpha_i(\theta_{k+1} - \theta_k)}{2\pi} \left[ \frac{1}{n + i\frac{2\pi}{\theta_{k+1} - \theta_k}} (-\cos(n\theta_{k+1}) + \cos(n\theta_k)) \right. $$
$$\left. + \frac{1}{n - i\frac{2\pi}{\theta_{k+1} - \theta_k}} (-\cos(n\theta_{k+1}) + \cos(n\theta_k)) \right]$$

$$C_n = \sum_{k=1}^{Z-1} \sum_{i=0}^{N} \frac{\alpha_i(\theta_{k+1} - \theta_k)}{2\pi} \left[ \frac{1}{n + i\frac{2\pi}{\theta_{k+1} - \theta_k}} (\sin(n\theta_{k+1}) - \sin(n\theta_k)) \right. $$
$$\left. + \frac{1}{n - i\frac{2\pi}{\theta_{k+1} - \theta_k}} (\sin(n\theta_{k+1}) - \sin(n\theta_k)) \right]$$

$$n \in [1; N]$$

$A_n$: amplitude in terms of acoustic pressure at the frequency $n * f_r$
$\Theta_k$: angle of the *k*th blade relative to the origin of the reference
**N**: number of terms in the decomposition as a Fourier series of the time signal of the acoustic pressure between $\Theta_k$ and $\Theta_{k+1}$
**Z**: number of blades
$\alpha_i$: function obtained by means of interpolation of the amplitudes of the rays detected experimentally on wheels which have different numbers of blades which are regularly spaced apart.

4. Method according to claim 1,
**characterised in that** the number of iterations (N1) is fixed at 1000.

5. Rotary machine, **characterised in that** it comprises blades whose irregular distribution is obtained in accordance with the method of any one of claims 1 to 4.

FIG. 1

FIG. 2

FIG. 3

## RÉFÉRENCES CITÉES DANS LA DESCRIPTION

**Littérature non-brevet citée dans la description**

- Réduction of the tonal noise annoyance of axial flow fans by means of optimal blade spacing. **CATTANEI et al.** APPLIED ACOUSTICS. ELSEVIER PUBLISHING, 26 Septembre 2007, vol. 68, 1323-1345